# EUROPEAN PATENT APPLICATION

(11) **EP 4 819 016 A1**
(43) Date of publication of application: **07.10.2026**
(21) Application number: 25168649.9
(22) Date of filing: 04.04.2025
(51) Int. Cl.: G06Q 20/40

(54) **DETECTING FRAUDULENT MERCHANTS**

(71) Applicant: Mastercard International, Inc., Purchase, NY 10577 (US)
(72) Inventor: HALL, James, San Anselmo (US); LOPUCH, Adam, Norwalk (US); CAMPBELL, Brandon, Decatur (US)
(74) Representative: Barker Brettell LLP

(57) **Abstract**

The present invention provides a computer implemented method for determining if a merchant account is associated with fraudulent activity. The method comprises receiving (601) data relating to a fraudulent merchant account, determining (603) a total amount in funds returned to one or more customer accounts due to one or more disputed transactions between the merchant account and the one or more customer accounts within a predetermined period of time, and a total amount in funds received by the merchant account within the predetermined period of time, and determining (605) a ratio of these two values. The method further comprises labelling (609) the ratio value as indicating that the merchant account is associated with fraudulent activity and inputting (611), into a machine learning model, the labelled ratio value to train the machine learning model to predict fraudulent activity based on the ratio.

## Description

### Field of Invention

The present invention relates to a device and method for determining if a merchant account is associated with fraudulent activity. In particular, the method and device allow for the training of a machine learning model configured to predict whether a merchant account is associated with fraudulent activity.

### Background

Transactional and financial fraud may be difficult to accurately predict, especially concerning fraud relating to merchants and the accounts interacting with these merchants. There are significant challenges in identifying merchants involved in a specific type of fraudulent activity, often referred to as cycling merchants.

Cycling merchants are commonly created by fraudulent parties, and generate substantial revenue, typically for a period of 4 to 8 weeks, after which all traffic is redirected to another merchant. These types of fraudulent merchants appear abruptly, generate substantial revenue, and then disappear just as quickly, often leaving behind a trail of fraudulent activity, such as payment card chargebacks for non-delivered products as they are shut down. The transient nature of these merchants and the rapid cycling of their operations make it extremely difficult for financial institutions and payment networks to detect and track their activities in real-time.

Traditional detection systems, which often rely on static rules and thresholds, are ill-equipped to handle the dynamic and sophisticated tactics employed by these types of merchants. Moreover, the accounts interacting with these merchants pose an additional layer of complexity. These accounts, often associated with high-risk fraudulent activities interact with the merchants during their brief period of operation and then continue their activities elsewhere, making them difficult to track and monitor.

These challenges expose issuing banks to significant risks and potential regulatory penalties related to fraud such as money laundering. The inability to identify and mitigate these activities in a timely manner can lead to substantial financial losses for customers and banks, reputational damage, and potential non-compliance with anti-fraud regulations.

These issues underscore the need for a robust, dynamic, and proactive solution to detect and prevent fraudulent activities associated with the cycling merchants. The present invention sets out to address these challenges relating to detecting fraudulent merchant, and to provide a significant advancement in the field of fraud detection.

### Summary

According to an aspect of the present invention there is provided a computer implemented method for determining if a merchant account is associated with fraudulent activity, the method comprising: receiving data relating to a merchant account, wherein the data identifies the merchant account as being associated with fraudulent activity; determining a total amount in funds returned to one or more customer accounts due to one or more disputed transactions between the merchant account and the one or more customer accounts within a predetermined period of time, and a total amount in funds received by the merchant account within the predetermined period of time; determining a ratio value of the total amount in funds returned to the one or more customer accounts compared to the total amount in funds received by the merchant account within the predetermined period of time period; labelling the ratio value as indicating that the merchant account is associated with fraudulent activity; and inputting, into a machine learning model, the labelled ratio value to train the machine learning model to predict, based on the ratio, if a further merchant account is associated with fraudulent activity.

Advantageously, this allows for a machine learning model to be trained to predict whether a merchant account, associated with a merchant, is fraudulent based on its transactional activity with other, customer accounts. More specifically, the machine learning model is trained based on a ratio of funds returned due to disputed transactions compared to the total amount funds received by the merchant account, such that the model may predict based on determining said ratio for another merchant account, whether said other merchant account is fraudulent. This allows for an improved prediction and detection of fraudulent merchant accounts that may otherwise be difficult to detect, given as the transactional activity of merchant accounts known to be fraudulent is monitored and used to train the machine learning model, such that any further merchants exhibiting similar behaviour can be detected.

Further, determining a ratio of the total amount in funds returned to other accounts after disputed transactions compared to the total amount in funds received by the merchant account, allows for an improved prediction of fraud, given as it has surprisingly been found that a high proportion of disputed transactions and returned funds are likely be more indicative of fraudulent activity compared to other types of transactional activity. Fraudulent merchants are also detected at an earlier stage before they are shut down. The fraudulent merchants which are only operational for a very short period of time, such as 4 to 8 weeks, can therefore more accurately be detected within the short amount of time that they are operating (rather than after they have finished trading and thus no action can be taken), given as signs of these fraudulent merchants, such as the ratio of disputed transactions to total amounts received within their accounts, can be better detected by the trained machine learning model. Therefore, this method provides improved input data to train a machine learning model, such that the machine learning model generates more accurate predictions as to whether a merchant is associated with fraudulent activity than current methods.

A total amount in funds returned into the account comprises a total amount in funds returned to the account as one or more chargebacks as a consequence of one or more disputed transactions made by a payment card associated with each of the one or more customer accounts. The fraudulent activity may be money laundering, and the fraudulent merchants may be merchants associated with money laundering. The machine learning model may be a clustering model, a semi-supervised label propagation algorithm or an anomaly detection algorithm.

Preferably, the method may further comprise: determining identification data of a merchant associated with the merchant account, wherein the identification data comprises data relating to an identity of the merchant; labelling the identification data as indicating that the merchant account is associated with fraudulent activity; and inputting, into the machine learning model, the labelled identification data of the merchant to train the machine learning model to predict if the further merchant account is associated with fraudulent activity.

This allows for identification data relating to an identity of the merchant to be used to train the machine learning model. This provides further data to better train the machine learning model to predict whether a merchant is fraudulent based on its identity, and whether this is similar to any other identity of a merchant known to be fraudulent. This provides an improved prediction from the trained machine learning model, to predict if the further merchant is associated with fraud. The identification data of the merchant may comprise merchant category codes, names, groupings, attributes, or any other type of information that identifies the merchant, such as a merchant category code of a gambling merchant. The attributes of the merchant may comprise any one or combination of address city, country, phone number, or email of the merchant. The groupings of the merchant may comprise aggregate merchant id or parent organization.

Preferably, the method may further comprise: determining location data of a merchant associated with the merchant account, wherein the location data comprises data relating to a location of the merchant; labelling the location data as indicating that the merchant account is associated with fraudulent activity; and inputting, into the machine learning model, the labelled location data of the merchant to train the machine learning model to predict if the further merchant account is associated with fraudulent activity.

This allows for location data relating to a location of the merchant to be used to train the machine learning model. This provides further data to better train the machine learning model to predict whether a merchant is fraudulent based on its location, and whether this is similar to any other location of a merchant known to be fraudulent. This provides an improved prediction from the trained machine learning model, to predict if the further merchant is associated with fraud. The location data of the merchant may comprise address, city, county, state, country, phone number, email address, URL (Uniform Resource Locator) of a website associated with the merchant, age, number of locations, owner name, legal name or any other type of information relating to a location of the merchant.

Preferably, the method may further comprise: determining data representing a total number of financial institutions currently and/or previously associated with a merchant associated with the merchant account; labelling the data representing the total number of financial institutions as indicating that the merchant account is associated with fraudulent activity; and inputting, into the machine learning model, the labelled number of financial institutions to train the machine learning model to predict if the further merchant account is associated with fraudulent activity.

This allows for data relating to how many financial institutions associated with the merchant account to be used to train the machine learning model. This provides further insight into the behaviour of merchants known to be fraudulent to provide better input data to train the machine learning model to predict whether a merchant is fraudulent based on the financial institutions associated with its account. For example, if a fraudulent merchant only operates for a short period of time, it my often be the case that it does not have accounts with many financial institutions and may only have a single account with a with a single bank. Therefore, the number of financial institutions associated with a merchant may be an indication as to whether it is fraudulent or not. Therefore, determining this data and using it to train the machine learning model provides an improved output prediction from the trained machine learning model as to whether the further merchant is associated with fraud. The data representing the total number of financial institutions currently and/or previously associated with a merchant associated with the merchant account may be a numerical value corresponding to the number of financial institutions.

Preferably, the merchant account may be a second merchant account, the one or more customer accounts may be a second set of customer accounts, and the method may further comprise: receiving data relating to a first merchant account, wherein the data identifies the first merchant as being associated with fraudulent activity; determining a first set of customer accounts each having conducted a transaction with the first merchant account; determining data representing a total number of transactions that have occurred between the second merchant account and the first set of customer accounts; labelling the data representing the total number of transactions as indicating that the merchant account is associated with fraudulent activity; and inputting, into a machine learning model, the labelled total number of transactions to train the machine learning model to predict if the further merchant account is associated with fraudulent activity.

Advantageously, this provides a method of determining a total number of transaction that occurred between the merchant account and customer accounts, where those customer accounts are known to have already been involved in transactions with another fraudulent merchant. This data is then used to train the machine learning model to provide more accurate predictions as to whether a further merchant is associated with fraudulent activity. The first set of customer accounts that have conducted a transaction with the first merchant account, comprises each customer account transferring funds from their account to the merchant account. The first set of customer accounts may comprise the same set of accounts as the second set of customer accounts. Alternatively, some of the accounts of the first set of customer accounts may be the same as some of the second set of customer accounts, or the first set of customer accounts may comprise different accounts to the second set of customer accounts. The data representing the total number of transactions that have occurred between the second merchant account and the first set of customer accounts may be a numerical value corresponding to the number of total number of transactions.

Preferably, the method may further comprise: determining a first total number of transactions involving the merchant account within a first predetermined time period; determining a second total number of transactions involving the merchant account within a second predetermined time period, wherein the second predetermined time period occurs after the first predetermined time period; determining a difference between the first total number of transactions and the second total number of transactions; labelling the difference as indicating that the merchant account is associated with fraudulent activity; and inputting, into the machine learning model, the labelled difference to train the machine learning model to predict if the further merchant account is associated with fraudulent activity.

This allows for data relating to a difference in a number of transactions across different time periods to be determined and used to train the machine learning model. This provides further insight into the behaviour of merchants known to be fraudulent to provide better input data to train the machine learning model to predict whether a merchant is fraudulent based on whether a number of transactions involving said merchants changed across different time periods. For example, if a fraudulent merchant only operates for a short period of time with many transactions occurring within said short period of time, it my often be the case that whilst the merchant is operating many transactions are occurring and at a later point in time, the number of transactions occurring starts to quickly reduce as the merchant is quickly shut down. Therefore, the difference in a number of transactions occurring at the merchant account across two different time periods may be an indication as to whether it is fraudulent or not. Therefore, determining this data and using it to train the machine learning model provides an improved output prediction from the trained machine learning model as to whether the further merchant is associated with fraud. The transactions involving the merchant account may comprise funds being sent from the merchant account to another account (such as a customer account) or it may comprise funds being received by the merchant account from another account (such as a customer account).

Preferably, the method may further comprise: determining: a total amount in funds returned to a further one or more customer accounts due to a further one or more disputed transactions between the further merchant account and the one or more customer accounts within a predetermined time period, and a total amount in funds received by the further merchant account within the predetermined period of time; determining a ratio value for the further merchant, wherein the ratio value for the further merchant is the total amount in funds returned to the one or more customer accounts due to the further one or more disputed transactions compared to the total amount in funds received by the further merchant account within the predetermined period of time period; inputting, into the trained machine learning model, the further ratio value; and generating, by the trained machine learning model, a prediction, based on the further ratio, if the further merchant account is associated with fraudulent activity.

Advantageously, this allows for it to be determined whether a further merchant is fraudulent or not by the trained machine learning model. By inputting into the trained machine learning model, a ratio calculated in the same way of returned funds due to disputed transactions compared to the amount received by the further merchant account, the trained machine learning model is able to accurately predict based on its training of the initial merchant and ratio value of said merchant labelled as fraudulent, whether the further merchant should also be labelled as fraudulent or not. The predetermined time period in which the one or more disputed transactions are determined for the merchant may be the same length of time or a different amount of time as the predetermined time period used to determine the further one or more disputed transactions for the further merchant. The one or more customer accounts may comprise a same set of accounts as the further one or more customer accounts. Alternatively, some of the accounts of the one or more customer accounts may be the same as some of the further one or more customer accounts, or they may comprise different accounts.

Preferably, the method may further comprise, if the machine learning model predicts that the further merchant account is fraudulent: labelling the further merchant account as being associated with fraudulent activity; determining a data set comprising data relating to one or more customer accounts transacting with the further merchant; inputting, into a risk score machine learning model, the label given to the fraudulent further merchant and the data set; and generating, by the risk score machine learning model, a risk score associated with each of the one or more customer accounts transacting with the further merchant, wherein each of the risk scores is generated based on the label given to the further merchant and the data within the data set relating to each customer account.

Advantageously, this provides a method of generating a risk score for each account interacting with the labelled fraudulent merchant account. Therefore, not only does the method predict whether a merchant is associated with fraudulent activity, the method generates a risk score for any account making transactions with the fraudulent merchant to determine which of the accounts are fraudulent as well as the merchant. The risk score machine learning model that determines a risk score associated with the further merchant is a different machine learning model to the machine learning model trained to predict whether the further merchant is associated with fraudulent activity.

Preferably, the method may further comprise: identifying a transaction which occurred between the further merchant account and a customer account from the one or more customer accounts transacting with the further merchant account; and determining a rate at which further transactions occur from the customer account within a predetermined time period, and wherein the data set input into the risk score machine learning model comprises the determined rate.

Advantageously, this allows for the transactional activity of a selected account interacting with the fraudulent further merchant account to be determined and used as input into the risk score machine learning model to generate a fraud risk score for said selected account. Specifically, the rate at which further transaction occur from the selected account is determined and used as input within a predetermined time period. This allows for an improved input to be calculated which more accurately indicates whether an account may be fraudulent or not, such that the risk score machine learning model is able to generate more accurate detections of fraudulent accounts, based on the improved input.

Preferably, the method may further comprise: identifying a transaction which occurred between the further merchant account and a selected customer account from the one or more customer accounts transacting with the further merchant account; and determining a total amount in refunds received by the selected customer account within a predetermined time period, and wherein the data set input into the risk score machine learning model comprises the determined total amount in refunds.

Advantageously, this allows for the transactional activity of a selected account interacting with the fraudulent further merchant account to be determined and used as input into the fraud detection, where the transactional activity used includes a total amount in refunds received by the customer account. This allows for an improved input to be calculated which more accurately indicates whether an account may be fraudulent or not, such that the risk score machine learning model is able to generate a more accurate fraud risk score.

Preferably, the method may further comprise: identifying a transaction which occurred between the further merchant account and a selected customer account from the one or more customer accounts transacting with the further merchant account; and determining a total amount in funds sent from the selected customer account within a predetermined time period, and wherein the data set input into the risk score machine learning model comprises the total amount in funds sent.

Advantageously, this allows for the transactional activity of a selected account interacting with the fraudulent further merchant account to be determined and used as input into the fraud detection, where the transactional activity used includes a total amount in funds sent from the customer account to any other account. This allows for an improved input to be calculated which more accurately indicates whether an account may be fraudulent or not, such that the risk score machine learning model is able to generate a more accurate fraud risk score.

Preferably, the funds may be sent from the selected customer accounts in one or more transactions identified by a payment network as a high-risk transaction. **In** this way, only transactions that are high risk are used to determine a total amount in funds sent from the selected customer account. This allows for only relevant transactions to be used in determining the total amount, as many transactions may occur from the selected account, and only those that are relevant to detecting whether the account is fraudulent are required. This increases the efficiency of the process whilst also maintaining the accuracy of the fraud risk score generation, by providing accurate inputs relating to transactions of interest into the risk score machine learning model. The high-risk transactions may comprise gambling transactions, merchant cycling transactions, ATM transactions, cross border transactions, or any other type of transaction identified by the payment network as high-risk.

According to a further aspect of the present invention there is provided a device for determining if a merchant account is associated with fraudulent activity, the device comprising a processor and a memory, the memory comprising instructions which, when executed, cause the processor to perform the method of: receiving data relating to a merchant account, wherein the data identifies the merchant account as being associated with fraudulent activity; determining a total amount in funds returned to one or more customer accounts due to one or more disputed transactions between the merchant account and the one or more customer accounts within a predetermined period of time, and a total amount in funds received by the merchant account within the predetermined period of time; determining a ratio value of the total amount in funds returned to the one or more customer accounts compared to the total amount in funds received by the merchant account within the predetermined period of time period; labelling the ratio value as indicating that the merchant account is associated with fraudulent activity; and inputting, into a machine learning model, the labelled ratio value to train the machine learning model to predict, based on the ratio, if a further merchant account is associated with fraudulent activity.

According to a further aspect of the present invention there is provided a non-transitory computer-readable medium comprising instructions which, when executed by a computer, cause the computer to carry out the method of: receiving data relating to a merchant account, wherein the data identifies the merchant account as being associated with fraudulent activity; determining a total amount in funds returned to one or more customer accounts due to one or more disputed transactions between the merchant account and the one or more customer accounts within a predetermined period of time, and a total amount in funds received by the merchant account within the predetermined period of time; determining a ratio value of the total amount in funds returned to the one or more customer accounts compared to the total amount in funds received by the merchant account within the predetermined period of time period; labelling the ratio value as indicating that the merchant account is associated with fraudulent activity; and inputting, into a machine learning model, the labelled ratio value to train the machine learning model to predict, based on the ratio, if a further merchant account is associated with fraudulent activity.

According to a further aspect of the present invention there is provided a computer program product comprising instructions which, when the program is executed by a computer, cause the computer to carry out the method of: receiving data relating to a merchant account, wherein the data identifies the merchant account as being associated with fraudulent activity; determining a total amount in funds returned to one or more customer accounts due to one or more disputed transactions between the merchant account and the one or more customer accounts within a predetermined period of time, and a total amount in funds received by the merchant account within the predetermined period of time; determining a ratio value of the total amount in funds returned to the one or more customer accounts compared to the total amount in funds received by the merchant account within the predetermined period of time period; labelling the ratio value as indicating that the merchant account is associated with fraudulent activity; and inputting, into a machine learning model, the labelled ratio value to train the machine learning model to predict, based on the ratio, if a further merchant account is associated with fraudulent activity.

### Brief Description of Figures

Figure 1 shows a schematic diagram of a system for determining if a merchant account is associated with fraudulent activity, in accordance with the present disclosure;
Figure 2 shows a schematic diagram of a fraud prevention server within the system as shown in Figure 1, for training a machine learning model to predict if a merchant is associated with fraudulent activity;
Figure 3 shows a schematic diagram of the fraud prevention server as shown in Figure 2, for using a trained machine learning model, to predict if a merchant is associated with fraudulent activity;
Figure 4 shows a schematic diagram of the fraud prevention server as shown in Figures 2 and 3, for using a risk score machine learning model to detect whether an account associated with a merchant is associated with fraudulent activity;
Figure 5 shows a sequence flow diagram of a method performed by the fraud detection server of Figures 2 to 4, to determine if a merchant is associated with fraudulent activity, and to detect whether an account associated with the merchant is associated with fraudulent activity;
Figure 6 shows method steps of a computer implemented method for determining if a merchant account is associated with fraudulent activity; and
Figure 8 shows a data processing device, according to the present disclosure.

### Detailed Description

The present invention relates to a method and device for determining if a merchant account is associated with fraudulent activity. The system is configured to perform a method to determine data relating to the transaction history of a merchant account known to be fraudulent, in order to train a machine learning model based on this data. The method also involves determining further data relating to the accounts transacting with a fraudulent merchant account, in order to generate a risk score for said accounts using a fraud risk score model.

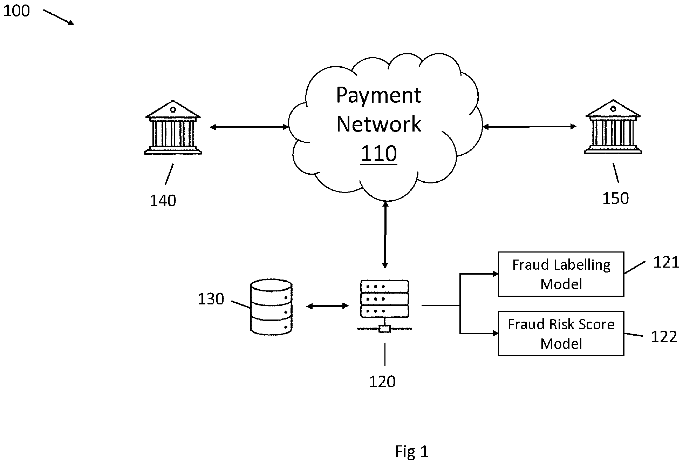

Figure 1 shows a schematic diagram of a system 100 for determining if a merchant account is associated with fraudulent activity, in accordance with the present disclosure. The system 100 includes a payment network 110. The payment network 110 is maintained by a payment network provider. Alternatively, the payment network **110** may be maintained by another entity, external to the payment network provider. The payment network provider may be any payment network provider such as Mastercard^{®}, for instance. However, it would be understood that the system 100 is applicable with any type of payment network provider.

The system 100 includes a fraud detection server 120. The fraud detection server 120 uses a plurality of different machine learning models all configured to detect fraud occurring over the payment network 100. The fraud detection server 120 is maintained by the payment network provider that maintains the payment network 100. However, alternatively the fraud detection server 120 may be maintained by a different entity to the payment network provider.

As shown in Figure 1, the fraud detection server 120 maintains a fraud labelling model 121 and a fraud risk score model 122. Each of the models 120, 121 are machine learning models trained and used by the payment network provider to detect fraud occurring over the payment network 110. The fraud labelling machine learning model 121 is a separate model to the fraud risk score model 122. Each of the fraud labelling model 121 and the fraud risk score model 122 has a different use, as will be explained in detail below.

The fraud detection server 120 further maintains a database 130. The database 130 stores transaction data relating to transactions that have occurred across the payment network 110, as well as any other data relating to transactions and the payment network 110 that is relevant for the fraud detection server 120 to detect fraud.

The payment network 110 connects entities engaging in financial transactions. The entities connected through the payment network 110 include financial institutions which each maintain accounts holding monetary funds. The system 100 includes one or more acquirer financial institutions 140, and one or more issuer financial institutions 150. The acquirer 140 and issuer 150 financial institutions include entities such as banks, credit unions, cryptocurrency providers and any other entity engaging in a financial transaction.

The payment network 110 is used by the entities to engage in financial transactions, where funds are sent from one account to another account via the payment network 110. The payment network 110 may be a credit card network, an electronic-funds-transfer network, a peer-to-peer payment network or ATM networks. However, it would be understood that the system 100 is applicable with any type of payment network 110.

During a transaction with funds that occurs over the payment network 110, the acquirer financial institutions 140 will receive the funds and the issuer financial institution 150 will issue the funds. For example, a customer may purchase goods from a merchant, and funds will issue from an issuer financial institution 150 associated with an account of the customer and be received by an acquirer financial instruction 140 for depositing into an account associated with the merchant. Through monitoring transactions that occur across the network payment 110, such as the example above, the payment network provider is able to obtain data relating to the transactions.

Merchants will have accounts maintained by the acquirer financial institutions 140. Some of these merchant accounts will be used by fraudulent parties to conduct fraudulent activities. Fraudulent merchant accounts will often only be operational for short periods of time, with unusually high revenue, until they are shut down and their transactional activity decays extremely quickly. Such merchants are herein referred to as cycling merchants and are used for illicit activities such as money laundering. Therefore, fraudulent activity may often occur over the payment network 110 by fraudulent merchant accounts maintained by the acquirer financial institutions 140 and the customer accounts maintained by the issuing financial institutions 150 transacting with the fraudulent merchant.

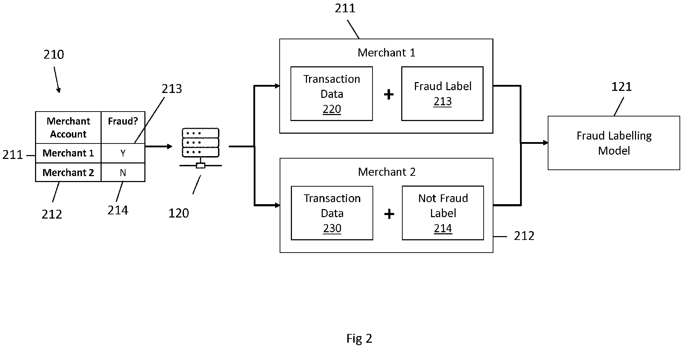

Figure 2 shows a schematic diagram of a fraud prevention server within the system 100 for training a machine learning model to predict if a merchant is associated with fraudulent activity. The fraud detection server 120 receives data 210 from the payment network 100. The data 210 received by the fraud detection server 120 includes data identifying whether one or more merchant accounts maintained by the financial institutions 150 are associated with fraudulent activity or not.

As shown in Figure 2, data 210 relates to two different merchant accounts, merchant account 211 denoted as 'Merchant 1', and merchant account 212 denoted as 'Merchant 2'. The data 210 received also indicates whether each of the merchants 211, 212 is known by the payment network 100 to be associated with fraudulent activity (by the labels 213 and 214). The payment network 100 determines whether a merchant account is fraudulent based on whether a fraudulent activity has occurred in relation to a merchant associated with said merchant account, for example, if a merchant had previously been operating money laundering activities.

As will be explained in detail below, the fraud detection server 120 proceeds to determine the transactional history of the merchants 211, 212, in which the data 210 relates to. By looking at transactions relating to the identified merchants 211, 212 the fraud detection server 120 is able to better understand the behaviour of fraudulent merchants compared to non-fraudulent merchants, generate useful data sets relating to the behaviour of fraudulent merchants, and use the data sets to train the fraud labelling model 121, such that the labelling model 121 is able to more accurately detect any further fraudulent merchants in the future.

The received data 210 identifies the merchant account 211 as fraudulent by the label 213. The fraud detection server 120 proceeds to determine a number of parameters relating to the transactional history of the merchant account 211.

The fraud detection server 120 determines a total amount in funds returned to customer accounts due to disputed transaction between the merchant account 211 and the customer accounts. A disputed transaction, otherwise referred to as a chargeback, occurs when a customer makes a purchase at a merchant, funds are transferred from the customer account to the merchant account, however the customer then disputes the transaction with a provider of the payment card or the payment network in which the transaction was made. This may be, for example, as the merchant did not provide the goods or services in which the customer had purchased, and the funds are returned to the customer account by any of the merchant account, acquirer financial institution 150 or by the issuer financial institution 140.

The fraud detection server 120 therefore determines a total amount in funds that has been transferred into the merchant account 211 from customer accounts, to then be disputed by the customers after the one or more transactions which transferred the funds into the merchant account 211 took place. The fraud detection server determines the total amount in chargebacks within a set predetermined time period. For example, the predetermined time period may be 1 day, 2 days, 1 week, 2 weeks, 1 month, 2 months or any other time period set by the fraud detection server 120.

The fraud detection server 120 determines a total amount in funds received by the fraudulent merchant account 211 within the predetermined time period. This is the total amount in funds across all transactions that was received by the merchant account 211, within the predetermined time period.

The fraud detection server 120 further determines a ratio of the total amount in funds of disputed transactions to the total amount in funds received. This ratio indicates a proportion of the total amount in funds received by the merchant, which for example corresponds to the total amount of goods and services supposedly sold by the fraudulent merchant that was then disputed by the customers involved in transactions with the merchant. For example, a fraudulent merchant may have a large proportion of their total received funds, such as 80% (i.e., a ratio of 0.8), that ended up being disputed by customers. The ratio is calculated based on the below equation: $Chargeback to total received ratio = \frac{total amount in disputed transactions}{total amount received}$

The fraud detection server 120 stores the calculated ratio value as transaction data 220. The transaction data 220 is stored in the database 130. The fraud detection server 120 also labels the calculated ratio value as being associated with fraudulent activity, as shown in Figure 2 with a fraud label 213.

The fraud detection server 120 proceeds to input the transaction data 220 and its associated label 213 into the fraud labelling model 121 to train the fraud labelling model 121 to determine whether a merchant may be associated with fraudulent activity or not. By training the fraud labelling model 121 based on the labelled calculated ratio value stored in transaction data 220, the fraud labelling model 121 will more accurately predict whether another merchant account is fraudulent, if it exhibits similar behaviour, i.e., has a similar ratio of chargebacks to total funds received to that of merchant account 211 known by the payment network provider to be fraudulent.

The fraud detection server 120 also determines further parameters to store in the transaction data 220 to train the fraud labelling model 121. The fraud detection server 120 determines identification data of the merchant associated with the merchant account 211. The identification data includes merchant category codes, merchant_id, names, groupings, attributes, or any other type of information that identifies the merchant. For example, the identification data determined for merchant account 211 may include a name of the merchant associated with the account, a category indicating that the merchant is associated with gambling, and that it has been operating for 2 months. The identification data further includes any variations in the merchant name or variations in the merchant_id.

The fraud detection server 120 determines location data of the merchant associated with the merchant account 211, which relates to a location of the merchant. The location data of the merchant includes any of address, city, county, state, country, phone number, email address, URL (Uniform Resource Locator) of a website associated with the merchant, age, number of locations, owner name, legal name or any other type of information relating to a location of the merchant.

The fraud detection server 120 determines a total number of financial institutions currently and/or previously associated with the merchant with the merchant account 211. It is to be understood that the merchant is associated with a financial institution if it has an account maintained by said financial institution. For example, the merchant associated with the fraudulent merchant account 211 may not have been operating for a long enough period of time to change their financial institution, and as such will only be associated with a single financial institution.

The fraud detection server 120 determines a total number of other fraudulent merchant accounts that are associated with the fraudulent merchant account 211. To do this, the fraud detection server 120 determines a set of customer accounts that have each made a transaction with the merchant account 211, and then determines if any of these customer accounts have previously also made a transaction with another account of a merchant known to be fraudulent. In this way, the fraud detection server 120 is able to determine whether any customer accounts have interacted with multiple different fraudulent merchants, which may, for example, demonstrate that the fraudulent merchants are associated with one another.

The fraud detection server 120 determines a difference in the total number of transactions of the merchant account across two different time periods. The fraud detection server 120 determines a first total number of transaction that involved the merchant account 211 within a first time period, and a second total number of transaction that involved the merchant account 211 within a second time period, where the first time period is before the second time period. The first and second total numbers of transactions are then compared to determine a difference between the two different number of transactions. In this way, the fraud detection server 120 is able to determine whether there had been a sharp decline in the activity of the merchant account 211 before it was no longer operational. For example, the first time period may be a first week, and the second time period may be the week after the first week, such that the transactions that are occurred at the merchant account 211 from one week to the next can be determined by the fraud detection server 120.

The fraud detection server 120 also collects any of the following data: details of previously fraudulent merchant accounts over a previous 1 to 2 years, average amount spent by customers at the merchant account 211 using payment cards, total cleared amounts of the merchant account 211, average amount spent by the merchant account 211 in high-risk countries, average amount of refunds paid into or out of the merchant account 211, a standard deviation of the amount spent by the merchant account 211, a total number of times each customer account has sent funds to the merchant account 211, a total number of the different customer accounts transacting with the merchant account 211, and a total number of times a previously known fraudulent merchant account has transacted with the merchant account 211.

Further ratios of any of the above values are also calculated by the fraud detection server 120 for input into the fraud labelling model 121 as a separate parameter. The purpose of the ratios is to identify sharp changes in revenue patterns characteristic of a fraudulent merchant. For example, the fraud detection server 120 may determine a ratio of the total number of times a customer account has transacted with the merchant account 211 compared to the total number of transactions that the merchant account 221 has been involved in. Any ratio calculated by the fraud detection server 120 may also be transformed, such as by log transformation or raising to the power, prior to input into the fraud labelling model 121.

The fraud detection server 120 proceeds to normalise the above determined parameters relating to the transactional activity of the merchant account 211 to a scale of 0.0-1.0 prior to ingestion by the fraud labelling model 122.

All of the above determined features are stored as transaction data 220 within database 130 as shown in Figure 1, and are labelled as being indicative of the merchant account 211 being associated with fraudulent activity. The transaction data 220 comprising all of the above data relating to the transaction history and behaviour of the fraudulent merchant account 211 is then input into the fraud labelling model 121 to train the machine learning model.

The transaction data 220 and fraud label 213 are input as features into the fraud labelling model 121 to train the fraud labelling model 121. The fraud labelling model is trained to recognise transactional activity of a further merchant account that is similar to the transactional activity of the transaction data 220 relating to the fraudulent merchant account 211.

Further as shown in Figure 2, the received data 210 also identifies that the merchant account 212 is not fraudulent, as shown by label 214. As explained above in relation to determining the transaction data 220 of merchant account 211, the fraud detection server 120 also determines the same data relating to the merchant account 212. The fraud detection server 120 then stores each of the determined features relating to the merchant account 212 and its associated merchant in transaction data 230 and labels the transaction data 230 with the label 232. The fraud detection server then inputs the transaction data 230 and its label 214 into the fraud labelling model 121 to train the fraud labelling model 121. Therefore, the fraud labelling model 121 is also trained to recognise transactional activity of a merchant account that is similar to the transactional activity of the transaction data 230 relating to the merchant account 211 which is not associated with fraud.

The fraud labelling model 121 labels all inputted merchant records based on a likelihood that they exhibit the fraudulent merchant behaviour, such as merchant cycling behaviour. The fraud labelling model 121 uses the above features built from input data and a combination of one or more algorithmic approaches, as will be explained below.

The fraud labelling model 121 is a clustering machine learning model that is trained on the labelled datasets 220, 230 of past fraudulent merchant accounts 211, 212 to produce a fraudulent merchant score as an inverse of the distance from labelled nodes. So as new merchants are introduced to the model, the closer they are clustered with previously identified clusters of fraudulent merchants, the higher the score assigned to that merchant. If the score is above a predetermined threshold, the fraud labelling model 121 labels that specific merchant as fraudulent.

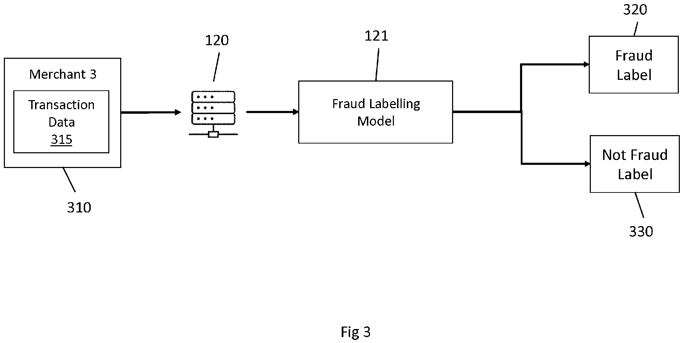

Once the fraud detection server 120 has sufficiently trained the fraud labelling model 121, the fraud detection server 120 is then used to accurately label any further merchants as being associated with fraudulent activity. Figure 3 shows a schematic diagram of the fraud prevention server as shown in Figure 2, for using a trained machine learning model, to predict if a merchant is associated with fraudulent activity.

Transaction data 315 relating to a further merchant account 310, denoted as 'Merchant 3' is received by the fraud detection server 120 from the payment network 110. The merchant account 310 is different to the merchant accounts 211, 212 shown in Figure 2.

The transaction data 315 includes a number of features relating to the merchant account 310. The transaction data 315 includes a total amount in funds returned to customer accounts due to disputed transactions (i.e., chargebacks) between the merchant account 310 and the customer accounts within a predetermined time period, a total amount in funds that has been received by the merchant account 310 from customer accounts within the predetermined time period, and a ratio of the total amount in funds of disputed transactions to the total amount in funds received, within the predetermined time period. For example, the predetermined time period may be 1 day, 2 days, 1 week, 2 weeks, 1 month, 2 months or any other time period set by the fraud detection server 120.

The transaction data 315 may also include any of the types of transaction data, identity data or location data for the further merchant account 310 and the merchant associated with the further merchant account, the same as the data that is described above in relation to transaction data 220 relating to the merchant account 211 shown in Figure 2.

The fraud detection server inputs the transaction data 315 relating to the further merchant account 310 into the trained fraud labelling model. The trained fraud labelling model generates an output as to whether the merchant account 310 is associated with fraudulent activity or not. The output of the trained fraud labelling model is either a label 320 indicating that the merchant account 310 is associated with fraudulent activity, or a label 330 indicating that the merchant is not associated with fraudulent activity.

The label 320, 330 predicted by the fraud labelling model 121 is then stored in the database 130 in a table of labelled merchants. The fraud detection server 120 uses the trained fraud labelling model 121 to generate labels 320, 330 for a plurality of further merchants, and stores the generated labels in the table.

Once fraudulent merchants have been detected and labelled using the trained fraud labelling model 121, the fraud detection server 120 proceeds to monitor the customer accounts transacting with the merchant accounts labelled by the fraud labelling model 121 as being fraudulent and determines whether these accounts are associated with fraud themselves.

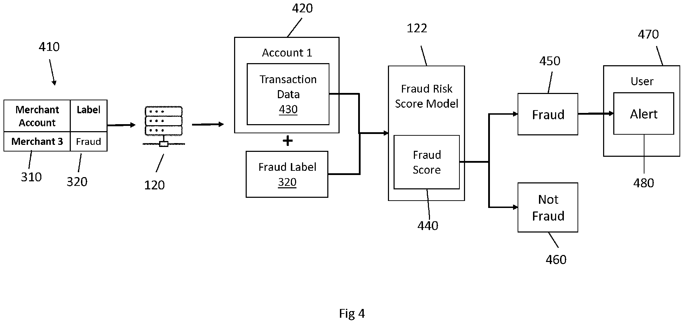

Figure 4 shows a schematic diagram of the fraud prevention server as shown in Figures 2 and 3, for using a fraud risk score model 122 to detect whether an account associated with a merchant is associated with fraudulent activity. The using of the fraud risk score model 122 as shown in Figure 4 is additional and optional to the training and using of the fraud labelling model 121, as shown in Figures 2 ad 3.

The fraud detection server 120 retrieves the table of labelled merchants stored in the database 130. Figure 4 shows the merchant account 310 of Figure 3 stored within a table 410. By way of example, it is assumed that the fraud labelling model 121 labels the merchant account 310 as being associated with fraudulent activity and generates an output of the fraud label 320. Therefore, for the example shown in Figure 4, the table 410 stored in database 130 includes the merchant account 310 labelled as being associated with fraudulent activity. However, the table 410 may include any number of merchants labelled by the fraud labelling model 121 as being fraudulent.

The fraud detection server 120 determines a plurality of different features relating to the accounts that have previously transacted with the merchant account 310, which are to be inputted into the fraud risk score model 122. The fraud risk score model 122 is a supervised machine learning model trained to detect the risk of a customer account being associated with fraudulent activity. The fraud risk score model 122 may be any supervised machine learning model, such as a random forest model.

By way of example, Figure 4 shows one account 420, denoted as 'Account 1'. However, it is to be understood that the following steps as shown in Figure 4 may occur for any number of accounts, provided that they have transacted with the fraudulent merchant account 310 in question and is not limited to the single identified account 420.

The fraud detection server 120 identifies a transaction which involved the merchant account 310, to then determine the account 420 that was also involved in the transaction, i.e., the identified transaction occurred between the merchant account 310 and the account 420. The fraud detection server 120 determines a rate at which further transaction occur from the identified customer account 420 within a predetermined time period, herein referred to as transaction velocity. The predetermined time period may be, for example, 6 hours, 1 day, 7 days, 14 days, 28 days, or any other period of time set by the fraud detection server 120.

The fraud detection server 120 determines a plurality of different rates of further transaction within a plurality of different time periods. For example, the fraud detection server 120 determines a rate of further transactions occurring from the account 420 over 6 hours, and a rate of further transaction occurring from the account 420 over 7 days. The further transaction are identified based on whether they are considered high risk by the payment network provider. A high-risk transaction may be, for example, a gambling transaction, an ATM transaction, a cross-border transaction, or any other type of transaction considered by the payment network provider to be high-risk.

The fraud detection server 120 also determines a ratio of one of the plurality of different further transaction rates compared to another of the calculated rates. As per the example above, this includes determining a ratio of the rate of transaction occurring over 6 hours compared to those occurring over 7 days. The fraud detection server 120 stores each of the calculated features in the database 130 as transaction data 430.

The fraud detection server 120 determines a further feature based on the transactional activity of the account 420, based on the following equations. A rate of further transactions occurring between the account 420 and the merchant account 310 (i.e., the '***approved merchant cycling* 56*d velocity***' feature), and a rate of all transactions occurring from the account 420 to any other account (the '***approved usd* 56*****d velocity**'* feature) are both calculated within a set time period.

The set time period is 56 days. The following equation is then applied by the fraud detection server 120 to determine a 56-day ratio of the above transaction velocities: $56 d ratio = {\left(\frac{approved merc h ant cycling 56 d velocity + 1}{approved usd 56 d velocity + 1}\right)}^{2}$

The fraud detection server 120 further applies a weight to the above calculated 56-day ratio before combining it with other high-risk factors to produce an overall '***risk_{usd}***' feature.

Additionally, the fraud detection server 120 calculates a '***safe_{usd}***' feature. This feature is calculated by determining a number of transactions that occur from the account 420 at merchants with merchant category codes (MCCs) identified by the payment network provider as being safe merchants, not associated with fraudulent activity. For example, the safe MCCs may be:
'4011','4111','4112','4784','4119','4121','4131','4214','4215','4411','4457','4468','4511',' 4582','4722','4789','4812','4813','4814','4816','4821','4899','4900','8011','8021','8031','8 041','8042','8043','8049','8071','8099','8050','8062','8211','8220','8241','8244','8249','82 99','8351', between '3000' and '3999' or between '9000' and '9999'.

The fraud detection server 120 calculates a '***refund***' feature, by determining a total amount in refunds received by the account 420 over the 56 day period. Based on this *'**refund**'* feature, and the rate of all transactions occurring from the account 420 i.e., the '***approved usd 56d velocity**'* feature, the fraud detection server 120 calculates a *'usd'* feature as shown in the following equation: $usd = approved usd 56 d velocity + \left(2 X refunds\right)$

Based on the *'**usd**',* the *'**refund***', the '***safe_{usd}***' and the **'*risk_{usd}***' features, the fraud detection server 120 is able to calculate a *'**remainder**'* feature, as shown in the following equation: $remainder = - 0.2 X \left(usd-{safe}_{usd}-\left({risk}_{usd}+refund\right)\right)$

The fraud detection server 120 proceeds to calculates an '***all comps***' feature, as shown in the following equation: $all comps = refund + unweig h ted velocities for all typologies + \left(0.2 X remainder\right)$

The '***unweighted velocities for all topologies***' feature is calculated by determining a rate of further transactions that occur with a merchant of each MCC, including those identified by the payment network as either safe or associated with fraudulent activity. Once the fraud detection server 120 has calculated the '***all comps***' feature, it proceeds to calculate a feature based on all of the above features relating to the transactional activity of the account 420. The fraud detection server determines a ***'cmp merchant cycling**'* feature based on the below equation: $cmp merchant cycling = \frac{approved merc h ant cycling 56 d velocity}{all comps}$

The '***approved merchant cycling* 56*d velocity'*** is the same feature that is used in the first equation calculating the '**56*d ratio'*** value shown above, which is the rate of further transactions occurring between the account 420 and the merchant account 310 identified by the fraud labelling model as being associated with fraudulent activity. i.e., the merchant account labelled as a cycling merchant account.

The *'**cmp merchant cycling**'* feature is then compared to other calculations made by the fraud detection server relating to other types of fraudulent activities, such as other money laundering activities. The *'**cmp merchant cycling**'* feature is then stored in the transaction data 430 in the database 130 and is assigned a fraudulent merchant reason code. The fraudulent merchant reason code indicates that customer account 420 may be fraudulent as it has been associated with a merchant account (merchant account 310) labelled by the fraud labelling model 121 as fraudulent.

The fraud detection server 120 then inputs the transaction data 420 into the fraud risk score model 122. The fraud detection server 120 inputs the determined rate at which further transaction occur from the identified account 420 within the predetermined time period, the ratio of one of the plurality of different further transaction rates compared to another of the calculated rates, and the calculated *'**cmp merchant cycling**'* feature into the fraud risk score model 122.

The fraud label 320 generated by the fraud labelling model 121 is also input into the fraud risk score model 122. This ensures information regarding the account 420 having transacted with a fraudulent merchant account 310 is considered by the fraud risk score model 122.

The fraud risk score model 122 generates a fraud risk score 440 based on the inputted transaction data 430 and the fraud label 320. If the risk score 440 is above a predetermined threshold, the fraud detection server 120 determines that the account 420 is fraudulent and associated with fraudulent activity, as shown by option 450 in Figure 4. The predetermined threshold for the risk score 440 may be 70%, 80%, 90% or any other threshold determined by the fraud detection server 120.

In this case, the fraud detection server 120 proceeds to send an alert 470 to a user device 470 that account 420 is fraudulent. The user device 470 may be a device associated with a financial institution that maintains the fraudulent account 420, a device associated with the payment network 100 and the payment network provider, or any other device which is to receive alerts of fraudulent accounts.

If the fraud risk score 440 is below the predetermined threshold, the fraud detection server 120 determines that the account 420 is not associated with fraudulent activity, and does not send an alert.

The fraud detection server 120 stores the generated risk score 440, with details of the account 420, in the database 130. The fraud detection server 120 also stores a reason code with the generated risk score 440 in the database 130, such as the fraudulent merchant reason code indicting that the account has interacted with a fraudulent merchant.

The fraud detection server 120 further repeats the above process and calculations, determining new features for input into the fraud risk score model 122 relating to the transactional activity of the account 420 over an extended period of time. For example, the fraud detection server 120 may monitor the account 420 over a period of 12 weeks, and calculate a plurality of features based on the account's activity. The fraud detection server 120 inputs each calculated feature into the fraud risk score model 122 to generate a plurality of different risk scores over the extended period of time, such as the 12 weeks. If a generated risk score is above the predetermined threshold, the fraud detection server 120 sends an alert 450 to the user device 470.

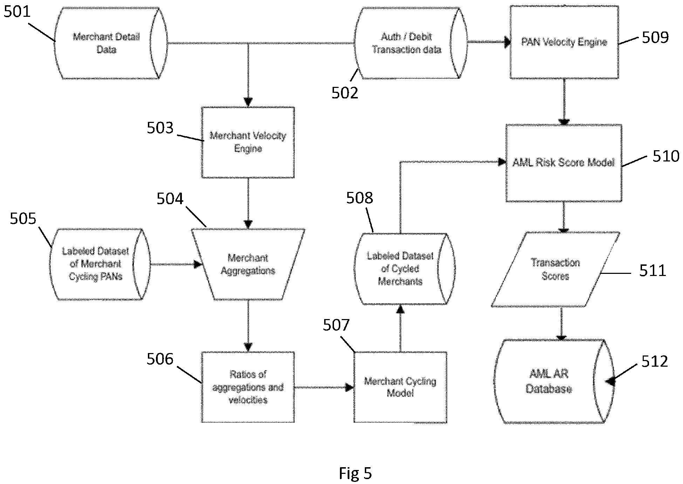

Figure 5 shows a sequence flow diagram of a method performed by the fraud detection server of Figures 2 to 4, to determine if a merchant is associated with fraudulent activity, and to detect whether an account associated with the merchant is associated with fraudulent activity.

A step 501, the fraud detection server 120 receives data identifying a merchant account from the payment network 100. At step 502 the fraud detection server 120 further receives data regarding the transactions that are occurring at the merchant account, such as transaction data 315 shown in Figure 3, and data relating to one or more accounts interacting with said merchant account, such as transaction data 430 shown in Figure 4.

At step 503, the fraud detection server 120 determines a number of different features relating to the transaction activity of the merchant account in a merchant velocity engine, based on the data received at steps 501 and 502. These features are the features described above in relation to Figure 2. At step 504, the fraud detection server 120 has determined a number of different features, such as the total amount in chargebacks and the total amount in funds reived by the merchant account.

At step 505, the fraud detection server 120 determines any other merchants previously labelled by the fraud labelling model 121 as being fraudulent that have made a transaction with the merchant of interest. This data has already been stored in the database 130 by the fraud detection server 120. Alternatively, the data regarding any previous fraudulent merchants may be received from the payment network 110 as part of the data received at step 502.

At step 506, the fraud detection server 120 calculates ratio values of the different features, such as the ratio of chargebacks to total amount received by the merchant account (as described in relation to Figure 2).

At step 507, the fraud detection server 120 inputs all of the determined features and data relating to the transactional activity of the merchant account into the trained fraud labelling model 121 (denoted as 'Marchant Cycling Model' in Figure 5).

At step 508, the fraud labelling model 121 outputs a label for the merchant account, indicating whether it is associated with fraudulent activity or not. Steps 501 to 507 may be implemented by the fraud detection server 120 for any number of merchant accounts, in which case, a table of all labelled merchant accounts (which are labelled by the fraud labelling mode 121) is generated at step 508.

At step 509, the fraud detection server 120 determines a number of different features relating to the transaction activity of a customer account interacting with the merchant account, in a PAN velocity engine. To determine the features the fraud detection sever 120 uses the data received from the payment network at step 502. These features are the features described above in relation to Figure 4, such as the rate at which further transactions occur from the account and the *'**cmp merchant cycling'*** feature.

At step 510, the fraud detection server 120 inputs all of the calculated features and data from step 509 and the label generated by the fraud labelling model 121 at step 508, into the fraud risk score model 122 (denoted as 'AML Risk Score Model' in Figure 5).

At step 511, the fraud risk score model 122 generates a fraud risk score based on the inputted features for the customer account. At step 512, the risk score is stored in the database 130, in associated with the details of the account.

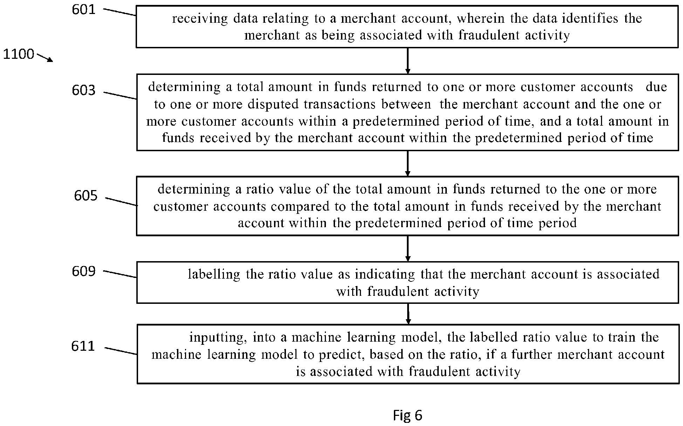

Figure 6 shows a flow diagram of a computer implemented method 600 for determining if a merchant account is associated with fraudulent activity.

At step 601 the method involves, receiving data relating to a merchant account, wherein the data identifies the merchant as being associated with fraudulent activity.

At step 603 the method involves, determining a total amount in funds returned to one or more customer accounts due to one or more disputed transactions between the merchant account and the one or more customer accounts within a predetermined period of time, and a total amount in funds received by the merchant account within the predetermined period of time.

At step 605 the method involves, determining a ratio value of the total amount in funds returned to the one or more customer accounts compared to the total amount in funds received by the merchant account within the predetermined period of time period.

At step 607 the method involves, labelling the ratio value as indicating that the merchant account is associated with fraudulent activity.

At step 609 the method involves, inputting, into a machine learning model, the labelled ratio value to train the machine learning model to predict, based on the ratio, if a further merchant account is associated with fraudulent activity.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device.

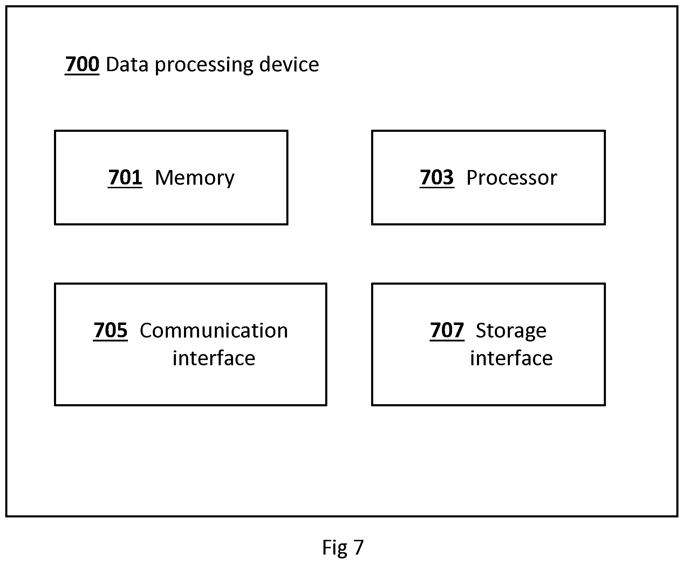

Similarly, any steps of any of the methods described herein may be performed by data processing devices. By way of example, Figure 7 shows, in schematic form, a data processing device 1200 that is suitable for performing the functions of the servers of the payment network 110, the fraud detection server 120, or any other entity. The data processing device 700 may automatically perform any of the methods described herein.

Data processing device 700 includes a processor 703 for executing instructions. Instructions may be stored in a memory 701. Processor 703 may include one or more processing units (e.g., in a multi-core configuration) for executing instructions. The instructions may be executed within a variety of different operating systems on the data processing device 900, such as UNIX, LINUX, Microsoft Windows^{®}, etc. More specifically, the instructions may cause various data manipulations on data stored in memory 701 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 703 is operatively coupled to a communication interface 705 such that data processing device 700 can communicate with a remote device, such as another data processing device of the system. For example, communication interface 705 may receive communications from another member of the system.

Processor 703 may also be communicatively coupled to a storage device such as a database, depending on the function of data processing device 700 within the context of the system. The storage device is any computer-operated hardware suitable for storing and/or retrieving data, where in the case of a secure storage medium the data is stored and retrieved securely.

The storage database may, for example, include the database 130, and it can be external to data processing device 700 and located remotely. Alternatively, it can be integrated in data processing device 700. For example, data processing device 700 may include memory 701 as one or more hard disk drives acting as a storage database. Alternatively, where the storage database is external to data processing device 700, it can comprise multiple storage units such as hard disks or solid-state disks in a redundant array of inexpensive disks (RAID) configuration. The storage database may include a storage area network (SAN) and/or a network attached storage (NAS) system. In some arrangements, the system and methods may be deployed in a cloud-based environment.

Processor 703 can be operatively coupled to the storage device (storage database) via a storage interface 707. Storage interface 707 is any component capable of providing processor 703 with access to the storage device. Storage interface 707 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 803 with access to the storage device.

Memory 701 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

As used herein, the term "non-transitory computer-readable media/medium" is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Furthermore, as used herein, the term "non-transitory computer-readable media/medium" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the specification herein, the above-described embodiments of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

While the disclosure has been described in terms of various embodiments, the person skilled in the art will recognise that the disclosure can be practiced with modification within the spirit and scope of the claims.

Although it is described that the fraud detection server 120 is maintained by the same payment network provider that maintains the payment network 110, in other arrangements the fraud detection server 120 may be maintained by a different entity to the payment network 110. In this alternative arrangement, the fraud detection server 120 may have been given access to receive transaction data obtained by the payment network provider from the payment network 110.

Although it is shown in Figure 1 that the fraud detection server 150 is only in communication with the payment network 110, in other arrangements the fraud detection server 120 may be in direct communication with each or one of the issuer and acquirer financial institutions 140, 150.

The fraud labelling model 121 and the fraud risk score model 122 are configured to detect the fraudulent activities of money laundering. However, the fraud labelling model 121 and the fraud risk score model 122 may be used to detect any type of fraud, such as network security fraud. Therefore, a fraud detected by the fraud detection server 120 may be a fraud of money laundering, fraudulent activity and/or a network security fraud.

By way of example, Figure 2 shows data 210 relating to two different merchants, merchant account 211 denoted as 'Merchant 1', and merchant account 212 denoted as 'Merchant 2'. However, it is to be understood that the data 210 received by the fraud detection server may comprise data relating to any number of merchants and merchant accounts, known by the payment network provider or the fraud detection server 120 to be fraudulent or not.

As described above in relation to Figure 2, the fraud detection server 120 determines a total amount in funds returned to a plurality of customer accounts due to disputed transaction between the merchant account and the customer accounts, as a feature of the transactional activity of the merchant account 211. However, in alternative arrangements the fraud detection server 120 may determine a total amount in funds returned to any number of customer accounts, including a singular customer account.

As shown in Figure 2 and described above, all of the data determined by the fraud detection server 120 is included into the transaction data 220 and used to train the fraud labelling model 121. However, it is to be understood that any combination of the determined features mentioned above may be included into transaction data 220 and used to train the fraud labelling model. For example, only the ratio of chargebacks to total funds reived and merchant location data may be used to train the fraud labelling model 121. Each of the determined features may also be individually labelled and input as separate features into the fraud labelling model 121 to train the model.

Although it is described that the fraud labelling model 121 is a clustering machine learning model. Alternatively, the fraud labelling model 121 may be a semi-supervised label propagation algorithm that is used to spread small populations of known fraudulent labels to nearby merchants, thus giving previously unlabelled merchants a likelihood score to be fraud related. Alternatively, the fraud labelling model 121 may be a supervised machine learning model that is trained on previously identified fraudulent merchant examples and the label assigned to a merchant is derived from the probability output of the model. Alternatively, the fraud labelling model 121 may be an anomaly detection algorithm that is applied to model the majority of non-fraudulent merchants as 'normal.' Merchants with behaviours that significantly deviate from this normal pattern are flagged as anomalies and assigned higher likelihood of exhibiting the fraudulent merchant behaviour.

As shown in Figure 4 and described above, all of the data determined by the fraud detection server 120 relating to the account 420 is included into the transaction data 430 inputted into the fraud risk score model 122. However, it is to be understood that any combination of the determined features mentioned above may be included into transaction data 430 and used to input into the fraud risk score model 122. For example, only the a *'**cmp merchant cycling**'* feature may be input into the fraud risk score model 122. Each of the determined features may also be individually labelled and input as separate features into the fraud risk score model 122. It is to also be understood that any of the features calculated by the equations described in relation to Figure 4 may be input into the fraud risk score model 122 as separate individual features as well as the *'**cmp merchant cycling**'* feature which combines all of the individually calculated features.

## Claims

1. A computer implemented method for determining if a merchant account is associated with fraudulent activity, the method comprising:
receiving data relating to a merchant account, wherein the data identifies the merchant account as being associated with fraudulent activity;
determining a total amount in funds returned to one or more customer accounts due to one or more disputed transactions between the merchant account and the one or more customer accounts within a predetermined period of time, and a total amount in funds received by the merchant account within the predetermined period of time;
determining a ratio value of the total amount in funds returned to the one or more customer accounts compared to the total amount in funds received by the merchant account within the predetermined period of time period;
labelling the ratio value as indicating that the merchant account is associated with fraudulent activity; and
inputting, into a machine learning model, the labelled ratio value to train the machine learning model to predict, based on the ratio, if a further merchant account is associated with fraudulent activity.

2. The computer implemented method according to any preceding claim, the method further comprising:
determining identification data of a merchant associated with the merchant account, wherein the identification data comprises data relating to an identity of the merchant;
labelling the identification data as indicating that the merchant account is associated with fraudulent activity; and
inputting, into the machine learning model, the labelled identification data of the merchant to train the machine learning model to predict if the further merchant account is associated with fraudulent activity.

3. The computer implemented method according to any preceding claim, the method further comprising:
determining location data of a merchant associated with the merchant account, wherein the location data comprises data relating to a location of the merchant;
labelling the location data as indicating that the merchant account is associated with fraudulent activity; and
inputting, into the machine learning model, the labelled location data of the merchant to train the machine learning model to predict if the further merchant account is associated with fraudulent activity.

4. The computer implemented method according to any preceding claim, the method further comprising:
determining data representing a total number of financial institutions currently and/or previously associated with a merchant associated with the merchant account;
labelling the data representing the total number of financial institutions as indicating that the merchant account is associated with fraudulent activity; and
inputting, into the machine learning model, the labelled number of financial institutions to train the machine learning model to predict if the further merchant account is associated with fraudulent activity.

5. The computer implemented method according to any preceding claim, wherein the merchant account is a second merchant account, the one or more customer accounts is a second set of customer accounts, and the method further comprises:
receiving data relating to a first merchant account, wherein the data identifies the first merchant as being associated with fraudulent activity;
determining a first set of customer accounts each having conducted a transaction with the first merchant account;
determining data representing a total number of transactions that have occurred between the second merchant account and the first set of customer accounts;
labelling the data representing the total number of transactions as indicating that the merchant account is associated with fraudulent activity; and
inputting, into a machine learning model, the labelled total number of transactions to train the machine learning model to predict if the further merchant account is associated with fraudulent activity.

6. The computer implemented method according to any preceding claim, the method further comprising:
determining a first total number of transactions involving the merchant account within a first predetermined time period;
determining a second total number of transactions involving the merchant account within a second predetermined time period, wherein the second predetermined time period occurs after the first predetermined time period;
determining a difference between the first total number of transactions and the second total number of transactions;
labelling the difference as indicating that the merchant account is associated with fraudulent activity; and
inputting, into the machine learning model, the labelled difference to train the machine learning model to predict if the further merchant account is associated with fraudulent activity.

7. The computer implemented method according to any preceding claim, the method further comprising:
determining: a total amount in funds returned to a further one or more customer accounts due to a further one or more disputed transactions between the further merchant account and the one or more customer accounts within a predetermined time period, and a total amount in funds received by the further merchant account within the predetermined period of time;
determining a ratio value for the further merchant, wherein the ratio value for the further merchant is the total amount in funds returned to the one or more customer accounts due to the further one or more disputed transactions compared to the total amount in funds received by the further merchant account within the predetermined period of time period;
inputting, into the trained machine learning model, the further ratio value; and
generating, by the trained machine learning model, a prediction, based on the further ratio, if the further merchant account is associated with fraudulent activity.

8. The computer implemented method according to claim 7, the method further comprising, if the machine learning model predicts that the further merchant account is fraudulent:
labelling the further merchant account as being associated with fraudulent activity;
determining a data set comprising data relating to one or more customer accounts transacting with the further merchant;
inputting, into a risk score machine learning model, the label given to the fraudulent further merchant and the data set; and
generating, by the risk score machine learning model, a risk score associated with each of the one or more customer accounts transacting with the further merchant, wherein each of the risk scores is generated based on the label given to the further merchant and the data within the data set relating to each customer account.

9. The computer implemented method according to claim 8, the method further comprising:
identifying a transaction which occurred between the further merchant account and a customer account from the one or more customer accounts transacting with the further merchant account; and
determining a rate at which further transactions occur from the customer account within a predetermined time period, and wherein the data set input into the risk score machine learning model comprises the determined rate.

10. The computer implemented method according to claim 8 or claim 9, the method further comprising:
identifying a transaction which occurred between the further merchant account and a selected customer account from the one or more customer accounts transacting with the further merchant account; and
determining a total amount in refunds received by the selected customer account within a predetermined time period, and wherein the data set input into the risk score machine learning model comprises the determined total amount in refunds.

11. The computer implemented method according to any of claims 8 to 10, the method further comprising:
identifying a transaction which occurred between the further merchant account and a selected customer account from the one or more customer accounts transacting with the further merchant account; and
determining a total amount in funds sent from the selected customer account within a predetermined time period, and wherein the data set input into the risk score machine learning model comprises the total amount in funds sent.

12. The computer implemented method according to claim 11, wherein the funds are sent from the selected customer accounts in one or more transactions identified by a payment network as a high-risk transaction.

13. A device for determining if a merchant account is associated with fraudulent activity, the device comprising a processor and a memory, the memory comprising instructions which, when executed, cause the processor to perform the method of claim 1 or any claim dependent thereon.

14. A non-transitory computer-readable medium comprising instructions which, when executed by a computer, cause the computer to carry out the method of claim 1 or any claim dependent thereon.

15. A computer program product comprising instructions which, when the program is executed by a computer, cause the computer to carry out the method of claim 1 or any claim dependent thereon.
